# EUROPEAN PATENT APPLICATION

(11) **EP 1 574 747 A2**
(43) Date of publication of application: **14.09.2005**
(21) Application number: 05251467.6
(22) Date of filing: 10.03.2005
(51) Int. Cl.: F16G 13/06

(54) **A chain**

(30) Priority: 11.03.2004 GB 0405547; 17.03.2004 GB 0405909
(71) Applicant: RENOLD Plc, Manchester M22 5WL (GB)
(72) Inventor: Lodge, Christopher James, Glossop, Derbyshire SK13 1LP (GB)
(74) Representative: Every, David Aidan

(57) **Abstract**

A power transmission chain has a plurality of overlapping inner (11) and outer (12) link plates interconnected by transverse pins (13) that pass through aligned apertures in the overlapping plates (11,12). The pins (13) are square or rectangular in cross section and one of the planar surfaces on each pin is designed to bear against an arcuate bearing surface (17) defining part of the aperture in the inner link plate (11). The outer link plate (12) has a square or rectangular aperture (16a) that is a friction fit with the pin (13). The arrangement provide an articulating joint in which there is rolling contact between the planar and arcuate bearing surfaces during articulation of the first link member on the pin and thus reduces noise and wear.

## Description

The present invention relates to a chain of the kind used for power transmission purposes including transportation in a conveyor.

A conventional chain used for transmission or transportation purposes has overlapping chain link members or plates that are interconnected by pins that pass through aligned holes in adjacent link members. In roller bush chains opposed inner link plates are connected with opposed pairs of outer link plates by pins about which the inner link plates articulate but to which the outer link plates are fixed by, for example, an interference fit. The opposed inner link plates are joined by a transverse bush that is received in apertures in the plates and through which the connecting pin passes. A roller is rotatably disposed on the bush.

A conventional chain of the kind described above is generally driven by a sprocket and suffers from a tendency to wear as a result of rubbing contact between components of the chain as the link plates articulate. In particular there is significant wear at the bearing contact surfaces between the chain links and the pins. Wear in chains leads to chain elongation, inefficient power transmission or unmeshing of the chain from the sprockets. Attempts to reduce the tendency to wear include making the bearing contact surfaces smooth and hard and regular lubrication both of which add significant cost to the manufacture and/or running of a chain.

It is an object of the present invention to obviate or mitigate the aforesaid disadvantages.

According to the present invention there is provided a power transmission chain having a longitudinal axis and comprising a plurality of first and second link members interconnected by transverse pins such that the links are able to articulate relative to one another, at least one first aperture defined in the first link member and at least one second aperture defined in the second link member, adjacent first and second link members being overlapped such that the first and second apertures are substantially aligned, said transverse pins being received in aligned first and second apertures, wherein the first link members are free to articulate relative to the pin and the first aperture is defined at least in part by an arcuate bearing surface, and the pin has a substantially planar bearing surface in engagement with the arcuate bearing surface to provide an articulating joint in which there is rolling contact between the planar and arcuate bearing surfaces during articulation of the first link member on the pin.

The rolling contact between the first link member and the pin provides for a significant reduction in the wear of the chain as it eliminates the rubbing contact between the pin and the link members that is present in a conventional chain. The design also reduces the attendant noise. The arcuate bearing surface may be defined on one or both of the first and second link members.

The second link members may be fixed to said pin, ideally by means of a friction fit but other fixing means are contemplated. The part of the second link member that defines the aperture is preferably a friction fit with the external surface of the pin. The friction fit may be a slip fit in which case some form of retainer to prevent significant lateral movement of the link member would be required or it may be an interference fit.

Preferably the first link members are inner link members and the second link members are outer link members.

The pins may have a rectangular or square cross section.

The, or each, second aperture preferably has a shape that conforms to the cross section of the pin.

The arcuate bearing surface is preferably substantially convex.

The, or each, first aperture in the first link member may be defined by the arcuate bearing surface on one side and a second arcuate surface spaced therefrom and on an opposite side. The second arcuate surface is preferably concave. The first aperture may have substantially planar surfaces interconnecting the arcuate surfaces. The planar surfaces are preferably inclined relative to the longitudinal axis of the chain.

There may be a roller rotatably disposed on the pin.

The arcuate bearing surface may be symmetrical or asymmetrical.

The chain may be a leaf chain with interleaved strands of first and second link members.

Specific embodiments of the present invention will now be described, by way of example only, with reference to the accompanying drawings in which:
Figure 1 is a plan view of a first embodiment of the invention being part of a roller chain in accordance with the present invention, shown with some outer link plates removed to expose the inner link plates;
Figure 2 is side view of the chain of figure 1 in the direction of arrow A;
Figure 3 is a plan view of a second embodiment of present invention being part of a fork lift truck or leaf chain, shown with one outer link removed from the chain;
Figure 4 is a side view of the chain of figure 4;
Figure 5 is a schematic representation showing a side view of an inner link plate of the chain of figures 1 and 2 shown with a single pin;
Figure 6 is a similar view to that of figure 5 but showing the position of both pins in their respective apertures when the chain is fully engaged on a sprocket;
Figure 7 is a similar view to that of figure 6 but shows the position of the pins during meshing or unmeshing of the chain with the sprocket; and
Figure 8 is a similar view to that of figure 6 but shows the position of the pins before meshing i.e. when the chain is horizontal.

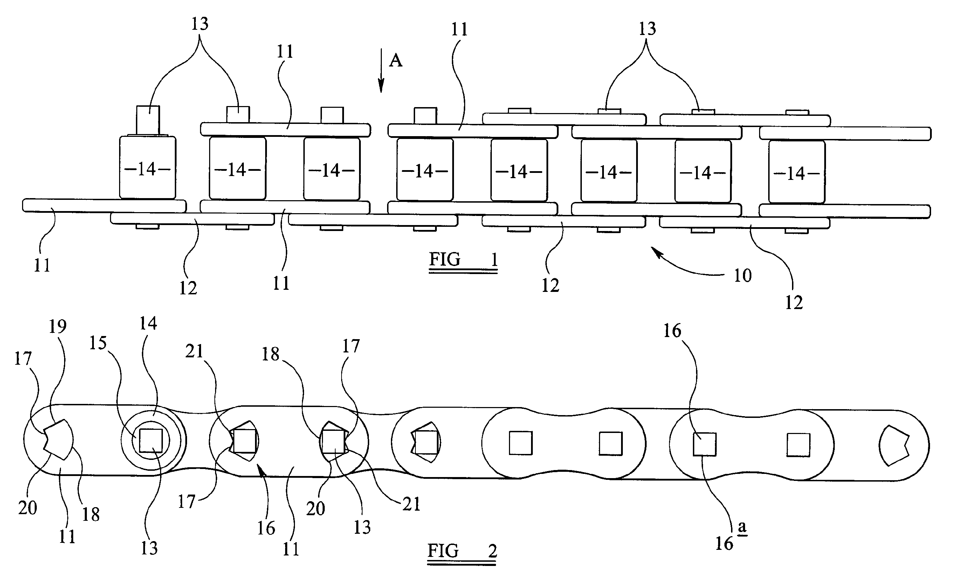

Referring now to figures 1 and 2 of the drawings, the exemplary roller chain 10 comprises two sides of inner and outer link plates 11, 12 arranged in overlapping relationship alternately along the length of the chain, the sides being separated and interconnected by transversely extending pins 13.

Each pin 13 is substantially square in cross-section and thus defines four substantially planar outer surfaces. A cylindrical roller 14 is rotatably mounted on each of the pins 13 and extends transversely between the two sides of the chain. An intermediate bush or sleeve 15 is optionally provided for support between the pin 13 and the roller. The bush or sleeve 15 has an internal bore that conforms to the outer surface of the pin 13 and an external surface that conforms to the bore of the roller 14.

Each of the inner and outer link plates 11, 12 has a pair of apertures 16, 16a designed to receive the pins 13. Adjacent inner link plates 11 on each side of the chain are interconnected by an outer link plate 12 that is arranged such that it overlaps with each inner link plate 11 to the extent that respective apertures 16, 16a are aligned in order to receive a pin 13.

In the case of the outer link plates 12 the apertures 16a are substantially square in outline so as to conform to the outer surface of the pin 13. The aperture 16a is designed such that its edges defined by the plate ensure a friction fit with the pin. The aperture 16a may be of a size that provides an interference fit or may be slightly larger so as to provide a slip-fit. In the latter design a retaining member such as a circlip or a split pin is required to retain the outer link plate on the pin.

The apertures 16 in the inner link plates 11 are of a different profile to those of the outer link plates 12 and are such that they permit articulation of the plates 11 on the square section pin 13. The inner link aperture 16 is defined by four edges 17, 18, 19, 20. A first convex arcuate edge 17 is disposed closest to the end of the link plate 11 and a second concave arcuate edge 18 is laterally spaced in-board thereof. The aperture 16 is completed by upper and lower edges 19, 20 that extend between the ends of the arcuate edges 17, 18. The upper and lower edges 19, 20 are substantially flat and inclined to the axis of the chain. The convex arcuate edge 17 defines a bearing surface for engagement with an adjacent planar surface 21 of the pin 13.

In operation, the articulation of the inner link plates 11 on the pins 13 is controlled by the rolling contact of the convex arcuate bearing surface 17 against the adjacent planar bearing surface 21 of the pin 13. The remaining clearance between the pin 13 and the aperture edges 18, 19, 20 provides room for articulation of the inner link plate relative to the pin. The bearing surfaces 21, 17 of the pin 13 and link plate 11 thus serve to carry the load applied to the chain 10. At any point in time there is only a small contact area, A, between the inner link plate 11 and the pin 13. As the inner link plate articulates the contact area, A, moves along the respective bearing surfaces 17, 21. This action results in considerably reduced friction in comparison to the bearing between the pin and plate/bush in a conventional bush roller chain and therefore affords the possibility of lubrication-free running. The degree of articulation is dependent on factors such as the curvature of the arcuate bearing surface 17 on the inner link plate 11 and the amount of clearance between aperture edges 18, 19, 20 and the pin 13.

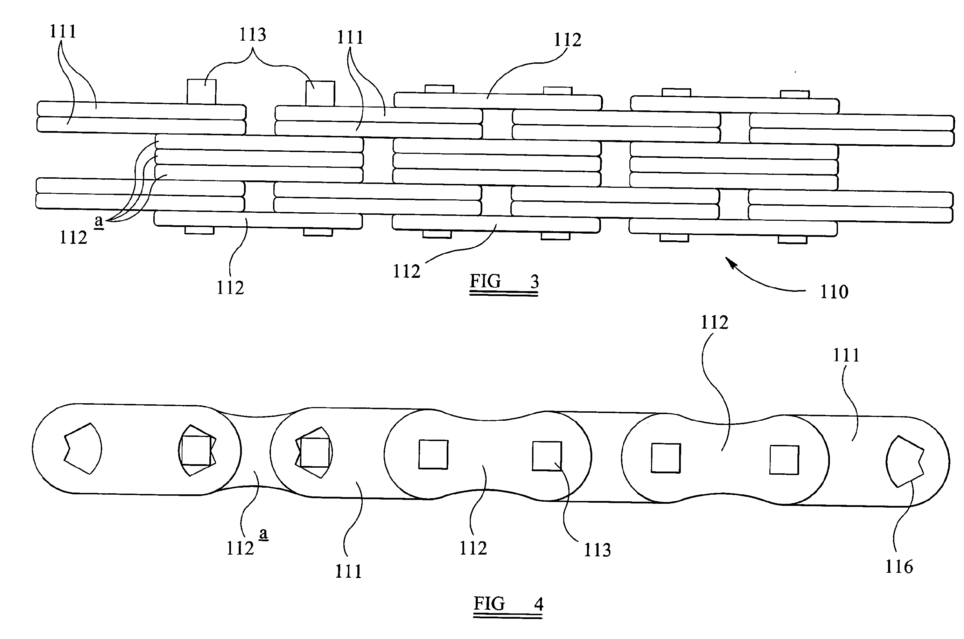

An alternative design is shown in figures 3 and 4 in which parts corresponding to those of figure 1 are indicated by the same reference numerals increased by 100 and are not further described expect in so far as they differ from their counterparts of figure 1. The chain 110 illustrated is a leaf chain of the kind used in the fork carriage lifting mechanism of a forklift truck. The links are arranged into rows of guide link plates 112 interleaved with rows of intermediate link plates 111. The guide link plates 112 take the form of the outer link plate described above with reference to figure 1 and the intermediate link plates 111 take the same form as the inner link plates. In the particular embodiment shown there are shown outer guide link plates 112 and central guide link plates 112a in a group of three. The intermediate link plates 111 are disposed between in two pairs of two plates on each side between the central plate guide plates 112a and the outer guide plates 112. As before, the pin 113 engages with the guide link plates 112, 112a in a friction fit but forms a rolling contact with the intermediate link plates 111.

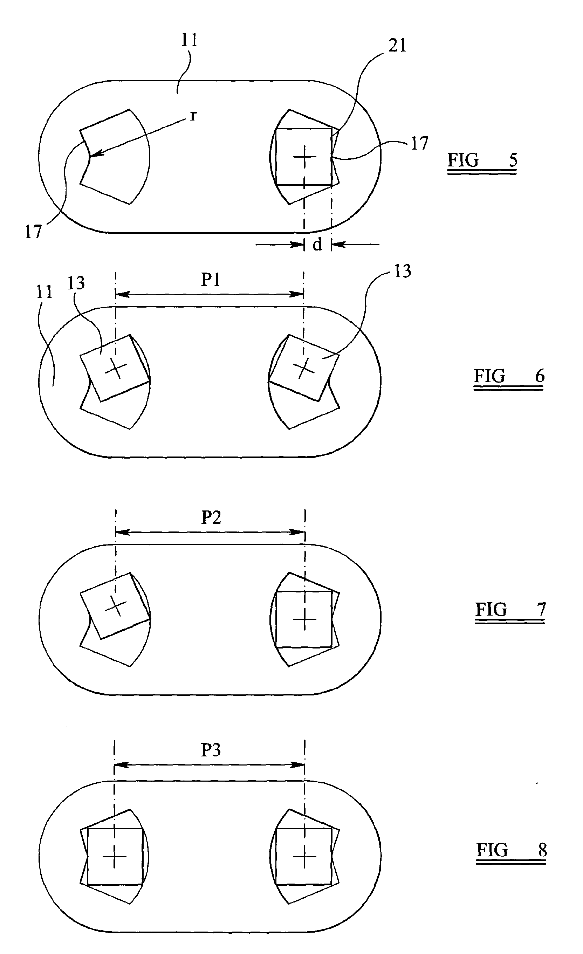

The ratio of the radius of curvature r of the arcuate bearing surface 17 to the distance d from the centre of the pin 13, 113 to its planar bearing surface 21 (see figure 5) determines the change in pitch of the chain links as they mesh with a sprocket. In order to ensure effective meshing with a standard sprocket it is important that the ratio is not too large or small. The preferred range of ratios of r:d is 0.5 to 1.5 and more preferably 0.8 to 1.1. The change in pitch during meshing or unmeshing is illustrated by figures 6 to 8. In figure 6 the chain is fully meshed with the sprocket and therefore the pins (and therefore outer links) have articulated fully relative to the inner link plate. The pitch between pin centres in this configuration is P1. In figure 7 the chain is shown during the meshing or unmeshing process with one of the outer link plates and pin articulated relative to the inner link plate and the other disposed in along the same axis. The pitch in this configuration has decreased to the dimension P2. When the chain link is fully unmeshed and the adjacent link plates are aligned along the horizontal axis the pins are at their shortest pitch P3.

It will be appreciated that numerous modifications to the above described design may be made without departing from the scope of the invention as defined in the appended claims. For example, the exact profile of the bearing surface defined on the inner or intermediate link plates can take any suitable form. In particular the profile may be asymmetrical so that the amount of articulation of the links when the chain bends in one direction is not the same as that in the other direction. This design can be used in particular in an "anti back bend" chain where full articulation is desirable in one direction for the chain to pass around a sprocket but articulation is prevented in the opposite direction. Furthermore the pin need not be square as shown in the figures but may take any convenient shape or form provided there is a substantially planar bearing surface at the part of the pin that is received in the aperture of the inner or intermediate link plates. Finally, the arcuate bearing surface may be defined on one or both of the inner (or intermediate) and outer (or guide) link plates. Thus, in one contemplated embodiment both sets of link plates are in rolling contact with the pin. In such a design the pin is retained in the chain by any suitable retainer such as, for example, a transverse split pin or a circlip.

## Claims

1. A power transmission chain having a longitudinal axis and comprising a plurality of first and second link members interconnected by transverse pins such that the links are able to articulate relative to one another, at least one first aperture defined in the first link member and at least one second aperture defined in the second link member, adjacent first and second link members being overlapped such that the first and second apertures are substantially aligned, said transverse pins being received in aligned first and second apertures, wherein the first link members are free to articulate relative to the pin and the first aperture is defined at least in part by an arcuate bearing surface, and the pin has a substantially planar bearing surface in engagement with the arcuate bearing surface to provide an articulating joint in which there is rolling contact between the planar and arcuate bearing surfaces during articulation of the first link member on the pin.

2. A chain according to claim 1, wherein the second link members are fixed to said pin.

3. A chain according to claim 2, wherein the second link members are fixed to said pin by means of a friction fit.

4. A chain according to claim 3, wherein the part of the second link member that defines the aperture is a friction fit with the external surface of the pin.

5. A chain according to claim 4, wherein the friction fit is a slip fit and a retaining member is provided to prevent significant lateral movement of the link member on said pin

6. A chain according to claim 4, wherein the second link member is an interference fit with said pin surface.

7. A chain according to claim 1, wherein the second link members are free to articulate relative to said pin.

8. A chain according to claim 7, wherein both the first and second apertures are defined at least in part by an arcuate bearing surface, so that both first and second link members are in rolling contact with said pin.

9. A chain according to any preceding claim, wherein the first link members are inner link members and the second link members are outer link members.

10. A chain according to any preceding claim, wherein the pins have a rectangular or square cross section.

11. A chain according to any one of claims 2 to 6, wherein the, or each, second aperture has a shape that conforms to the cross section of the pin.

12. A chain according to any preceding claim, wherein the arcuate bearing surface is substantially convex.

13. A chain according to any preceding claim, wherein the, or each, first aperture in the first link member is defined by the arcuate bearing surface on one side and a second arcuate surface spaced therefrom and on an opposite side.

14. A chain according to claim 13, wherein the second arcuate surface is concave.

15. A chain according to claim 14, wherein the first aperture has substantially planar surfaces interconnecting the arcuate surfaces.

16. A chain according to claim 15, wherein the planar surfaces are inclined relative to the longitudinal axis of the chain.

17. A chain according to any preceding claim, wherein there is a roller rotatably disposed on the pin.

18. A chain according to any preceding claim, wherein the arcuate bearing surface is symmetrical.

19. A chain according to any preceding claim, wherein the arcuate bearing surfaces is asymmetrical.

20. A chain according to any preceding claim, being a leaf chain with interleaved strands of first and second link members.

21. A chain substantially as hereinbefore described with reference to figures 1, 2 and 5 to 8 or figures 3, 4 and 5 to 8 of the accompanying drawings.
